# EUROPEAN PATENT APPLICATION

(11) **EP 1 927 968 A1**
(43) Date of publication of application: **04.06.2008**
(21) Application number: 06767693.2
(22) Date of filing: 30.06.2006
(51) Int. Cl.: G09F 9/00, B60R 11/02, G01M 11/00, G02F 1/13

(54) **DISPLAY, ITS INSPECTING METHOD, ITS MANUFACTURING METHOD, DISPLAY PANEL INSPECTING METHOD, AND DISPLAY PANEL MANUFACTURING METHOD**

(30) Priority: 21.09.2005 JP 2005274789
(71) Applicant: FUJITSU TEN LIMITED, Kobe-shi Hyogo 652-8510 (JP)
(72) Inventor: TANAKA, Shinya, Hyogo 652-8510 (JP)
(74) Representative: Ward, James Norman
(86) International application number: PCT/JP2006/313085
(87) International publication number: WO 2007/034611

(57) **Abstract**

The present invention provides a display apparatus including a display panel that displays individual images to a plurality of viewing directions on a same screen; and a display control portion that causes a first inspection image to a single viewing direction and a second inspection image to another viewing direction to be displayed on the display panel, as well as methods for inspecting and manufacturing the same. According to the present invention, it is possible to execute inspection, confirmation and adjustment of a crosstalk with ease, and reduce the man-hours of the inspection, the confirmation, and the adjustment (manufacture).

## Description

### TECHNICAL FIELD

The present invention relates to a display apparatus, and methods for inspecting and manufacturing the same, and methods for inspecting and manufacturing a display panel, and in particular to a display apparatus including a display panel, and methods for inspecting and manufacturing the same, and methods for inspecting and manufacturing the display panel.

### BACKGROUND ART

There has been known a so-called multi-view display apparatus which can display different visible images from respective different directions on a common (or single) display screen. For example, the multi-view display apparatus is provided with a parallax barrier in front of a liquid crystal panel, and the parallax barrier sorts directions of movement of light from a backlight for each pixel of the liquid crystal panel, and hence different information (i.e., images) can be displayed on the right and left of the display screen (e.g. see Document 1). By mounting such a display apparatus on a vehicle, while a driver watches a navigation image, a passenger of a front passenger's seat can watch other image such as a television program.
Document 1: Japanese Patent Application Publication No. 2005-78080

### DISCLOSURE OF THE INVENTION

### PROBLEMS TO BE SOLVED BY THE INVENTION

When a multi-view display panel or the multi-view display apparatus is manufactured or shipped, or the maintenance thereof is executed, executing various inspection, confirmation, and adjustment is demanded. For example, in the multi-view display panel including the parallax barrier, there is the case where reduction of brightness thereof occurs by assembling failure of the parallax barrier, or a crosstalk enlarges. Therefore, executing the inspection, the confirmation, and the adjustment detecting and adjusting such failure with ease, and reducing the man-hours of the inspection, the confirmation, and the adjustment (manufacture) are demanded.

The present invention has been made in view of the above-described problems, and it is an object of the present invention to provide an display apparatus, methods for inspecting and manufacturing the same, and methods for inspecting and manufacturing a display panel, which can easily execute inspection, confirmation and adjustment of the crosstalk of a multi-view display panel or the display apparatus including the multi-view display panel, and reduce the man-hours of the inspection, the confirmation, and the adjustment (manufacture).

### MEANS FOR SOLVING THE PROBLEMS

The present invention is a display apparatus including a display panel that displays individual images to a plurality of viewing directions on a same screen; and a display control portion that causes a first inspection image to a single viewing direction and a second inspection image to another viewing direction to be displayed on the display panel. According to the present invention, it is possible to execute inspection, confirmation and adjustment of a crosstalk of a multi-view display with ease, and reduce the man-hours of the inspection, the confirmation, and the adjustment (manufacture).

The present invention provides a display apparatus having a configuration such that, when a given condition is satisfied, the display control portion causes the first inspection image and the second inspection image to be displayed on the display panel. Further, the present invention may be a display apparatus having a configuration, which further includes an operation portion, such that when preset input operation is executed to the operation portion, the display control portion determines that the given condition is satisfied. According to the present invention, it is possible to prevent malfunction.

The present invention may provide a display apparatus having a configuration such that the first inspection image is a monochrome image, and the second inspection image is a monochrome image which is different from the first confirmation image. The present invention may provide a display apparatus having a configuration such that the first inspection image is a black monochrome image, and the second inspection image is a white monochrome image. According to the present invention, it is possible to execute inspection, confirmation and adjustment of a crosstalk with ease.

The present invention may provide a display apparatus having a configuration such that the first inspection image is a navigation image output from a navigation apparatus, and the second inspection image is an image which is different from the navigation image. According to the present invention, it is possible to execute inspection, confirmation and adjustment of a crosstalk with an image similar to an image really used for the display apparatus.

The present invention may provide a display apparatus having a configuration such that the first inspection image is a monochrome image, and the second inspection image is an image having a figure, which is different in color from the monochrome image, is superimposed on the monochrome image. According to the present invention, it is possible to execute inspection, confirmation and adjustment of a crosstalk with ease.

The present invention may provide a display apparatus having a configuration such that the first inspection image is a monochrome image, and the second inspection image is an image in which each monochrome image of the three primary colors is sequentially changed. According to the present invention, it is possible to execute inspection, confirmation and adjustment of a crosstalk for each primary color.

The present invention may provide a display apparatus having a configuration such that, when the given condition is satisfied, the display control portion causes an inspection menu image to be displayed, and causes the first inspection image and the second inspection image to be displayed based on a selected menu. According to the present invention, it is possible to easily execute inspection, confirmation and adjustment of a crosstalk with an inspection menu.

The present invention provides methods for inspecting and manufacturing a display apparatus which includes a display panel displaying individual images to a plurality of viewing directions on a same screen, and a main body portion connected to the display panel, including the steps of: displaying a first inspection image (or a first confirmation image) to a single viewing direction of the display panel and a second inspection image (or a second confirmation image) to another viewing direction thereof; inspecting a display state from the single viewing direction; and inspecting a display state from the another viewing direction. According to the present invention, it is possible to execute inspection, confirmation and adjustment of a crosstalk of a multi-view display including the main body portion and the display panel with ease, and reduce the man-hours of the inspection, the confirmation, and the adjustment (manufacture).

The present invention provides methods for inspecting and manufacturing a display panel which displays individual images to a plurality of viewing directions on a same screen, including the steps of: displaying a first inspection image (or first confirmation image) to a single viewing direction of the display panel and a second inspection image (or first confirmation image) to another viewing direction thereof; inspecting a display state from the single viewing direction; and inspecting a display state from the another viewing direction. According to the present invention, it is possible to execute inspection, confirmation and adjustment of a crosstalk of the display panel of a multi-view display with ease, and reduce the man-hours of the inspection, the confirmation, and the adjustment (manufacture).

### EFFECTS OF THE INVENTION

According to the present invention, it is possible to execute inspection, confirmation and adjustment of a crosstalk of a multi-view display panel and a display apparatus including the multi-view display panel with ease, and reduce the man-hours of the inspection, the confirmation, and the adjustment (manufacture).

### BRIEF DESCRIPTION OF THE DRAWINGS

Preferred exemplary embodiments of the present invention will be described in detail with reference to the following drawings, wherein:
FIG. 1 is a view illustrating a basic configuration of a display apparatus in accordance with a first exemplary embodiment of the present invention;
FIG. 2 is a perspective view showing an example in which the display apparatus is applied to a vehicle;
FIG. 3 is a functional block diagram of the display apparatus;
FIG. 4 is a functional block diagram showing a configuration of a controller;
FIG. 5 is a functional block diagram of first and second image quality adjusting circuits;
FIG. 6 is a functional block diagram of an image outputting portion;
FIG. 7 is a view illustrating a cross-sectional configuration of a display portion;
FIG. 8 is a front view of a liquid crystal panel;
FIG. 9 is a circuit diagram of a TFT substrate;
FIG. 10 is a view showing the appearance of the display apparatus in accordance with the first exemplary embodiment in a state where a display portion of the display apparatus is put in a main body portion;
FIG. 11 is a view describing a crosstalk;
FIG. 12 is a view describing viewing directions of a display screen;
FIG. 13 is a flowchart showing a controlling method of the display apparatus for inspection of the display apparatus in accordance with the first exemplary embodiment;
FIG. 14 is a view showing an example of a menu screen of an inspection mode displayed on the display screen when the inspection of the display apparatus is executed;
FIGs. 15A to 15C are views showing examples of images displayed on the display portion when the inspection of the display apparatus is executed;
FIG. 16A is a view showing an inspection image in accordance with a variation; and
FIG. 16B is a view showing an image in which the inspection image is watched.

### BEST MODE FOR CARRYING OUT THE INVENTION

A description will now be given, with reference to the accompanying drawings, of best modes for carrying out the invention.

### (First exemplary embodiment)

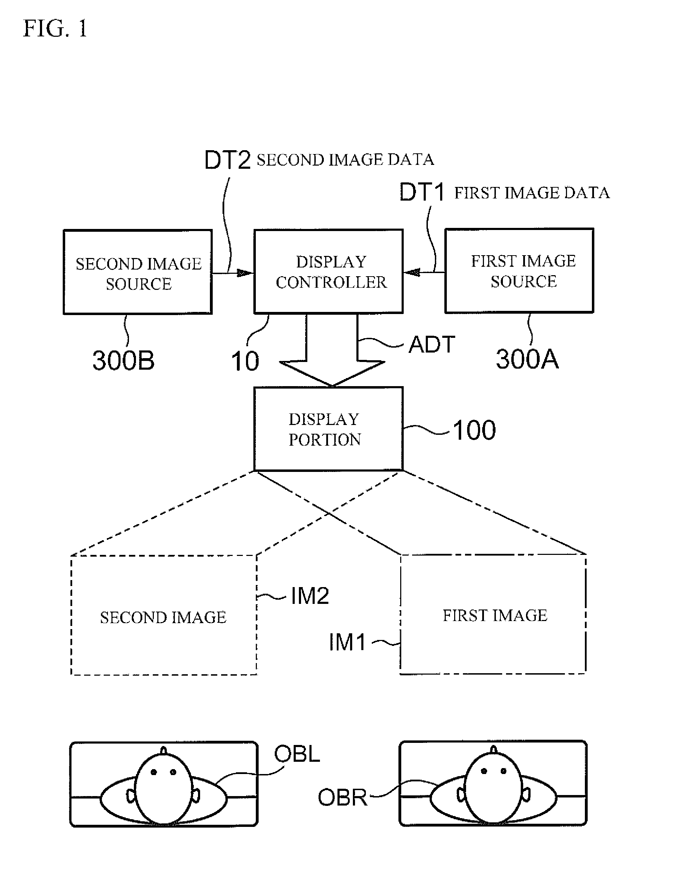

FIG. 1 is a view illustrating a basic configuration of a multi-view display apparatus in accordance with a first exemplary embodiment of the present invention. Referring now to FIG. 1, the display apparatus includes a display controller 10, and a display portion 100 as display means. To the display controller 10, image data DT1 is supplied from a first image source 300A that servers as a supply source, and at the same time, image data DT2 is also supplied from a second image source 300B that servers as a supply source. Then, image data ADT, which is composed of the first image data DT1 and the second image data DT2, is output to the common display portion 100. The configuration of the display controller 10 will be described later in detail. The first image source 300A and the second image source 300B are respectively composed of a camera, TV receiver, DVD reproducing portion, HD reproducing portion, navigation portion, and the like, as will be described later.

The display portion 100 includes: a liquid crystal panel; a backlight; a parallax barrier; and the like, as will also be described later. A first image IM1 based on the first image data DT1 and a second image IM2 based on the second image data DT2 are displayed on a common display screen so that an observer OBR can watch the first image IM1 from a right-hand direction and an observer OBL can watch the second image IM2 from a left-hand direction. The configuration of the display portion 100 will also be described later in detail.

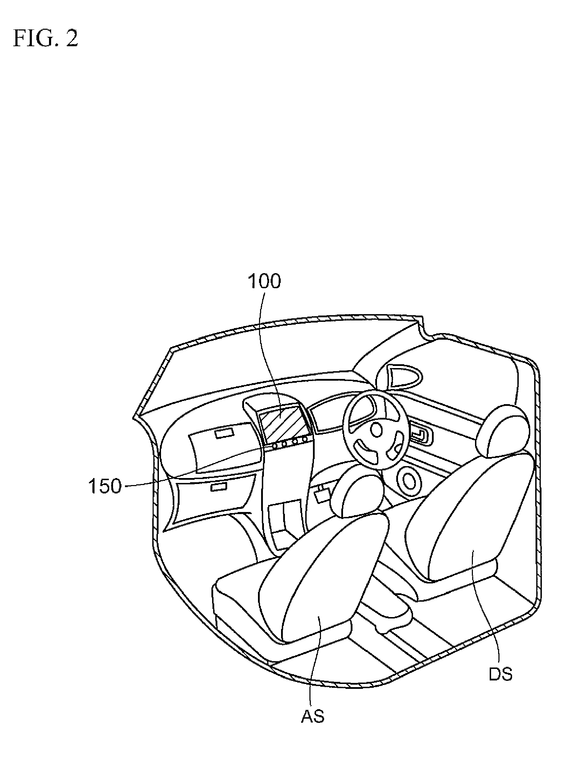

FIG. 2 is a perspective view showing an example in which the display apparatus is applied to a vehicle in accordance with the first exemplary embodiment of the present invention.
Referring now to FIG. 2, the display portion 100 is arranged between the driver's seat DS and the front passenger's seat AS in the dashboard area of the vehicle. In addition, the display portion 100 is provided with the operation portion 150 so as to manually operate the display apparatus.
According to an exemplary embodiment shown in FIG. 2, a passenger who sits on the driver's seat DS corresponds to the above-described observer OBR, and another passenger who sits on the front passenger's seat AS corresponds to the above-described observer OBL. Those passengers are able to simultaneously watch individual images, namely, the first image IM1 and the second image IM2, which are respectively different and displayed on the display portion 100, from the driver's seat DS and from the front passenger's seat AS.

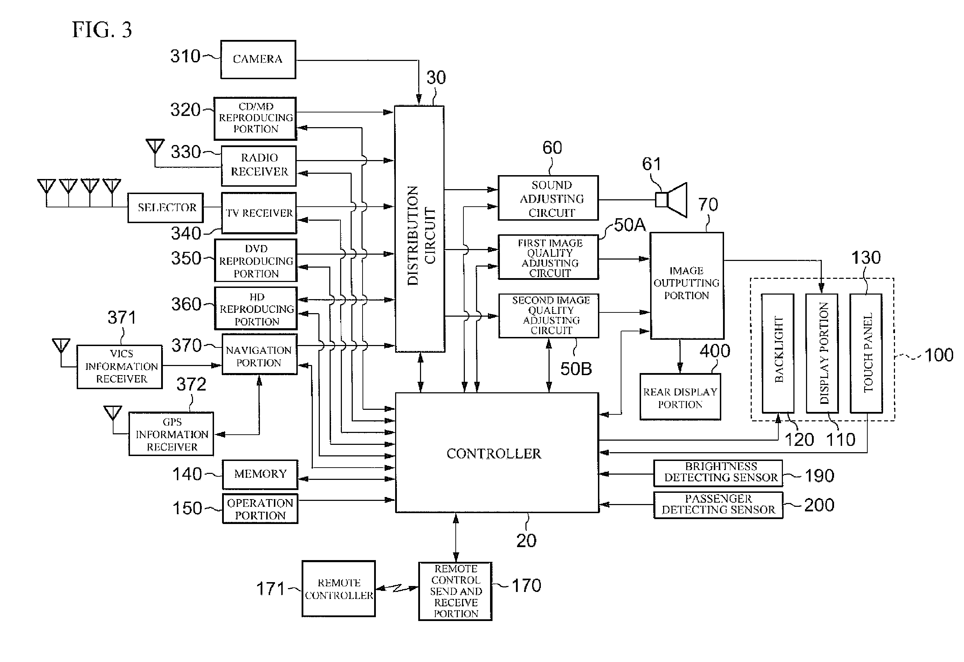

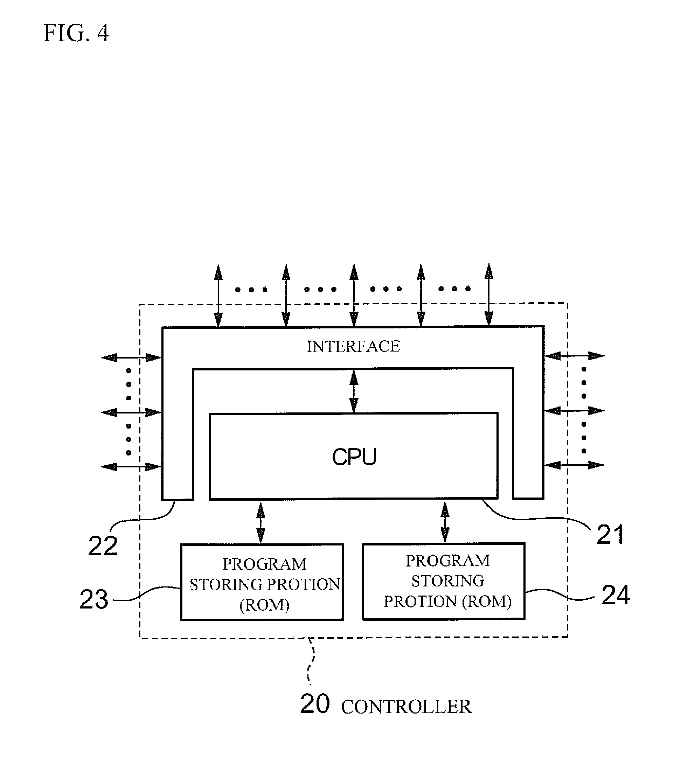

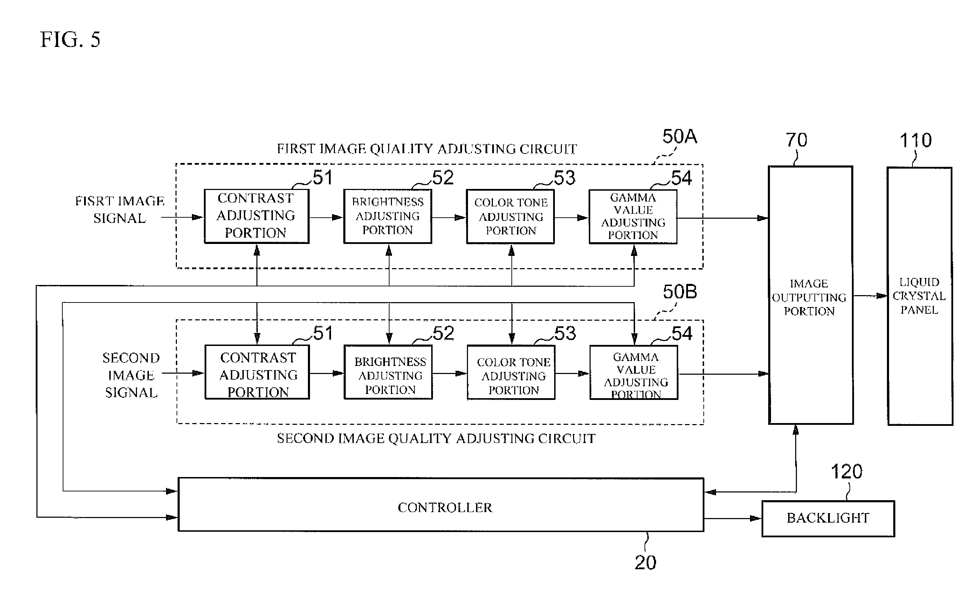

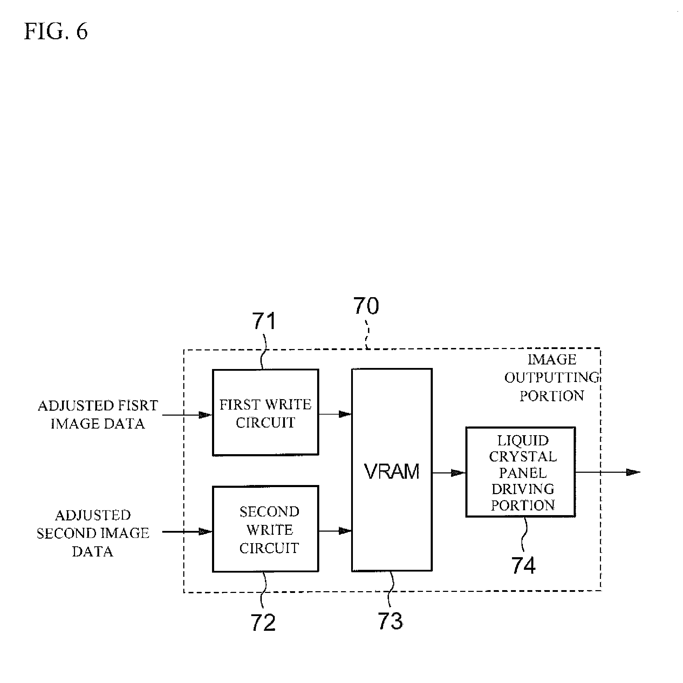

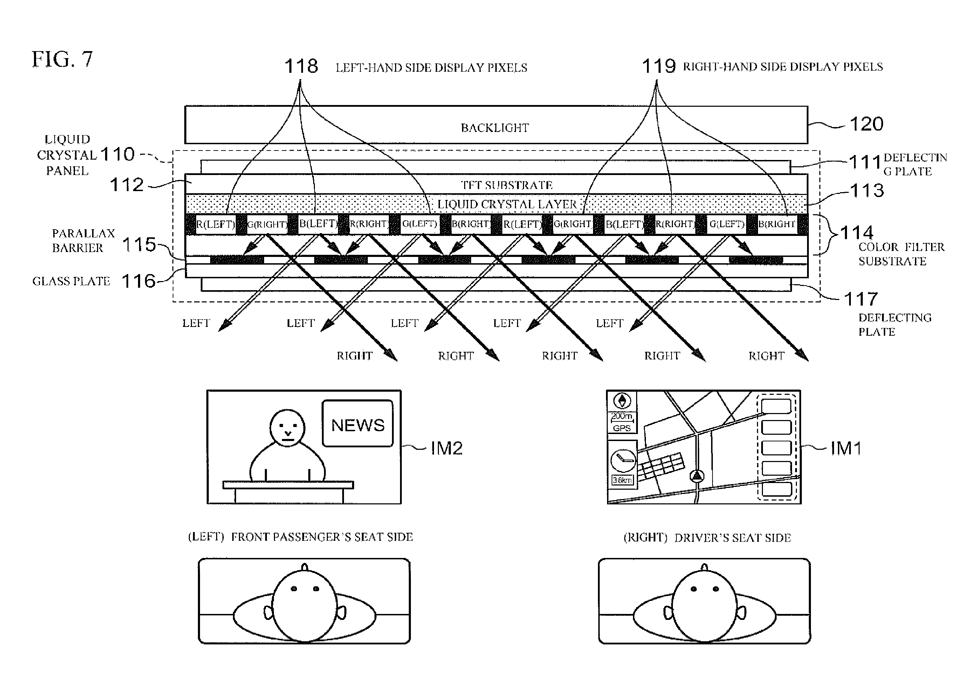

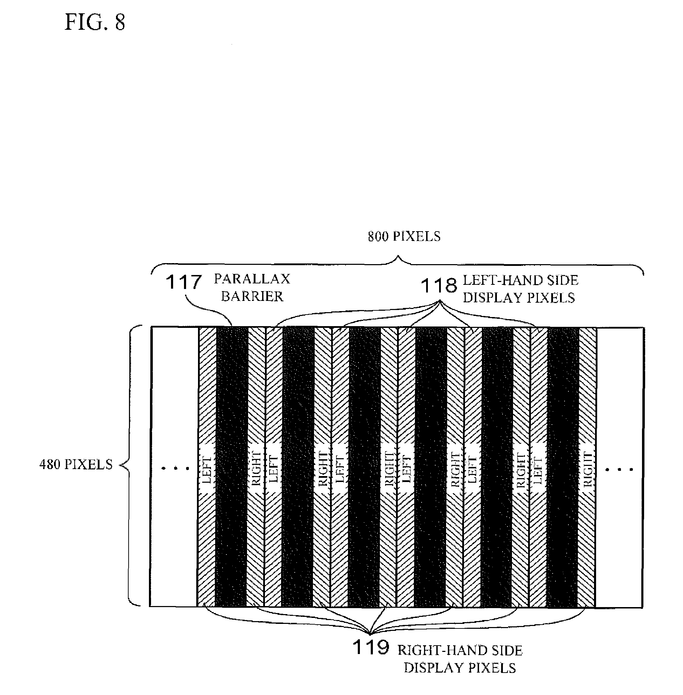

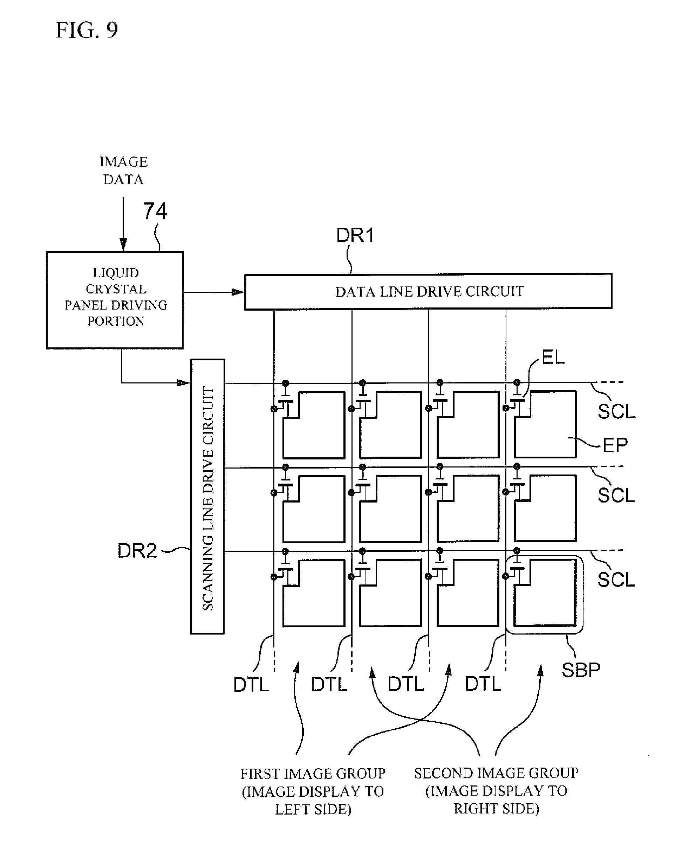

FIG. 3 through FIG. 9 illustrate specific configurations of the display apparatus in accordance with the first exemplary embodiment of the present invention. FIG. 3 is a functional block diagram of the display apparatus. FIG. 4 is a functional block diagram showing a configuration of the controller. FIG. 5 is a functional block diagram of first and second image quality adjusting circuits. FIG. 6 is a functional block diagram of an image outputting portion. FIG. 7 is a view illustrating a cross-sectional configuration and effects of a liquid crystal panel. FIG. 8 is a front view of the liquid crystal panel. FIG. 9 is a circuit diagram of a TFT substrate.

Referring now to FIG. 3, the display apparatus includes the display portion 100, a controller 20, a distribution circuit 30, a first image quality adjusting circuit 50A, a second image quality adjusting circuit 50B, an image outputting portion 70, and the like. The display controller 10 includes the controller 20, the distribution circuit 30, the first image quality adjusting circuit 50A, the second image quality adjusting circuit 50B, the image outputting portion 70, and the like.

Referring now to FIG. 4, the controller 20 includes a processor (CPU) 21, an interface 22, a ROM 23, a RAM 24, and the like. The controller 20 controls the display apparatus according to a program stored in the ROM 23 in a comprehensive manner. Also, the controller 20 controls a visible range of the first image IM1 and a visible range of the second image IM2, which are separated from each other by superimposing the first image IM1 and the second image IM2 to be displayed on the display portion 100, by adjusting the image quality of at least one of the first image IM1 and the second image IM2 to have a given range.

The controller 20 is connected to a camera 310, a compact disc/mini disc (CD/MD) reproducing portion 320, a radio receiver 330, a TV receiver 340, a digital versatile disc (DVD) reproducing portion 350, a hard disc (HD) reproducing portion 360, a navigation portion 370, and the like, which are mounted on a vehicle and respectively serve as supply sources supplying images and sounds, as illustrated in FIG. 3. The controller 20 sends and receives data to/from the afore-described components, and controls them. The camera 310 captures images of surroundings and the like of the vehicle. The CD/MD reproducing portion 320 reproduces music or images. The radio receiver 330 receives radio waves via an antenna. The TV receiver 340 receives TV waves via an antenna through a selector 341. The DVD reproducing portion 350 reproduces music information and images in a DVD. The HD reproducing portion 360 reproduces images and music information stored in a HD. The navigation portion 370 outputs maps or route guide images on the basis of road information received by a VICS information receiver 371 and geographic information received by a GPS information receiver 372.

Additionally, the controller 20 is also connected to an external memory 140, the operation portion 150, a remote control send and receive portion 170, a brightness detecting sensor 190, a passenger detecting sensor 200, and the like, and enables various controls on the basis of various kinds of data obtained from the afore-mentioned components. The external memory 140 stores various kinds of data. The operation portion 150 is provided for operating the display apparatus. The remote control send and receive portion 170 sends and receives infrared signals or wireless signals between a remote controller 171 provided for controlling the display apparatus remotely. The brightness detecting sensor 190 is composed of a light switch or a light sensor to detect the brightness inside the vehicle. The passenger detecting sensor 200 is composed of a pressure-sensitive sensor or the like on the driver's seat or the front passenger's seat to detect a passenger in the vehicle.

The distribution circuit 30, as illustrated in FIG. 3, distributes sound data and image data supplied from the above-described camera 310, the CD/MD reproducing portion 320, the radio receiver 330, the TV receiver 340, the DVD reproducing portion 350, the HD reproducing portion 360, the navigation portion 370, and the like, to a sound adjusting circuit 60, the first image quality adjusting circuit 50A or the second image quality adjusting circuit 50B, according to a control instruction issued by the controller 20.

The sound adjusting circuit 60 adjusts the sound data supplied from the distribution circuit 30 to output to a speaker 61, as illustrated in FIG. 3.

The first image quality adjusting circuit 50A and the second image quality adjusting circuit 50B, by reference to FIG. 5, include a contrast adjusting portion 51, a brightness adjusting portion 52, a color tone adjusting portion 53, a gamma value adjusting portion 54, and the like, respectively, and adjust the image qualities (contrast, brightness, color tone, and gamma value) of the first image data and the second image data, respectively, in response to the control instruction issued by the controller 20.

Referring now to FIG. 6, the image outputting portion 70 includes a first write circuit 71, a second write circuit 72, a video RAM (VRAM) 73, a liquid crystal panel driving portion 74, and the like. The first image data and the second image data, image qualities of which have respectively been adjusted by the first image quality adjusting circuit 50A and the second image quality adjusting circuit 50B, are respectively written into the first write circuit 71 and the second write circuit 72. The first write circuit 71 and the second write circuit 72 respectively write the first image data and the second image data, the image qualities of which are respectively adjusted by the first image quality adjusting circuit 50A and the second image quality adjusting circuit 50B, into given addresses of the VRAM 73, in order to superimpose such adjusted first image data and such adjusted second image data.

The VRAM 73 retains the image data on which the first image data and the second image data are superimposed. Such superimposed image data corresponds to respective pixels of the display portion 100. The liquid crystal panel driving portion 74 is a circuit that drives a liquid crystal panel 110, and also drives the corresponding pixels of the liquid crystal panel 110, on the basis of the superimposed image data retained in the VRAM 73. The liquid crystal panel 110 will be described later in detail.

The display portion 100 includes: the liquid crystal panel 110; a backlight 120; a touch panel 130; and the like, as illustrated in FIG. 3. The backlight 120 sheds illuminated lights from the back surface of the liquid crystal panel 110. The touch panel 130 is provided for inputting a signal to operate the display apparatus. Here, the touch panel 130 is not shown, yet is formed in a shape of transparent sheet and adhered to the front surface of the liquid crystal panel 110.

Referring now to FIG. 7, the liquid crystal panel 110 has a well-known structure. Sequentially from the backlight 120, there are provided a first deflecting plate 111, a thin film transistor (TFT) substrate 112, a liquid crystal layer 113, a color filter substrate 114 having pixels for three primary colors of RGB, a parallax barrier 115, a glass plate 116, a second deflecting plate 117, and the like.

The above-described liquid crystal panel 110 has a display screen in which, for example, 800 pixels are arranged in a horizontal direction and 480 pixels in a vertical direction, as illustrated in FIG. 7 and FIG. 8. Also, left-hand side display pixels 118 (hereinafter, also referred to as front passenger's display pixel 118) and right-hand side display pixels 119 (hereinafter, also referred to as driver's display pixel 119) are alternately arranged in a horizontal direction of the display screen.

The parallax barrier 115 is formed in a stripe-shaped manner, and includes shielding portions and transmitting portions, as illustrated in FIG. 7 and FIG. 8. The shielding portions are arranged between the left-hand side display pixels 118 and the adjacent right-hand side display pixels 119. By providing the parallax barrier 115 on the front surface of the color filter substrate 114, among the illuminated lights that have passed through the left-hand side display pixels 118, only the lights going towards the left side selectively pass through the transmitting portions of the parallax barrier 115. Among the illuminated lights that have passed through the right-hand side display pixels 119, only the lights going towards the right side selectively pass through the transmitting portions of the parallax barrier 115. This makes the first image IM1 visible from the right side (the driver's seat) of the liquid crystal panel 110, and also makes the second image IM2 visible from the left side (the front passenger's side), as illustrated in FIG. 7. Here, a similar parallax barrier as disclosed in Japanese Patent Application Publication No. 10-123461 or Japanese Patent Application Publication No. 11-84131 may be employed for the parallax barrier 115.

The TFT substrate 112, by reference to FIG. 9, includes a data line drive circuit DR1, a scanning line drive circuit DR2, vertically arranged scanning lines SCL, horizontally arranged data lines DTL, TFT elements EL, pixel electrodes EP corresponding to the TFT elements EL, and the like, whereas each of the TFT elements EL is formed in each region where each of the scanning lines SCL and each of the data lines DTL are crossed. Sub pixels SBP are formed by regions surrounded by the scanning lines SCL and the data lines DTL, and the sub pixels SBP arranged along each of the data lines DTL are alternately assigned to the left-hand side display pixels 118 and the right-hand side display pixels 119. A drive timing of the data line drive circuit DR1 is controlled by the liquid crystal panel driving portion 74 to control a voltage applied to the pixel electrode EP. A drive timing of the scanning line drive circuit DR2 is controlled by the liquid crystal panel driving portion 74 to selectively scan the TFT element EL.

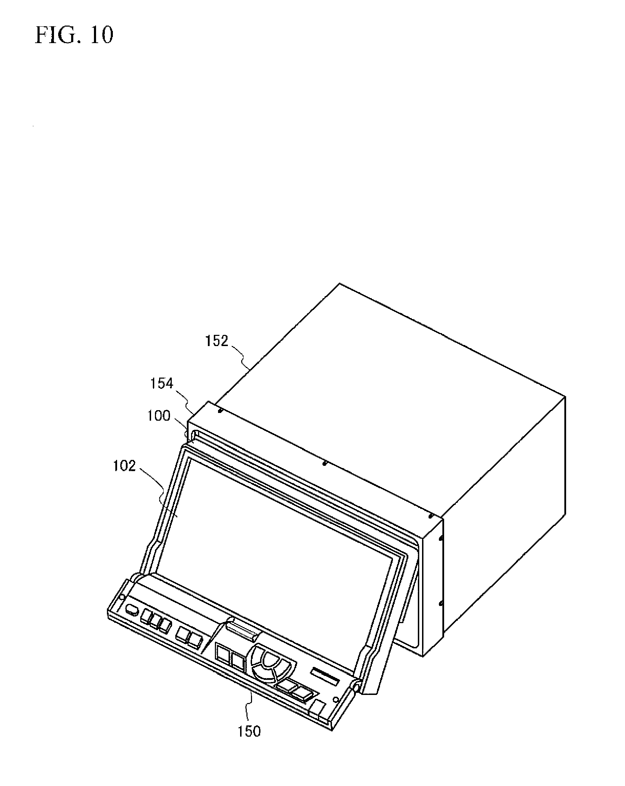

FIG. 10 is a view showing the appearance of the display apparatus in accordance with the first exemplary embodiment. The display apparatus has the display portion 100 including a display screen (display panel) 102 and the operation portion 150, and a main body portion 152. The display portion 100 may not include the operation portion 150. The display portion 100 is used in a state where it is put in a flame 154 provided around a front face of the main body portion 152. As shown in FIG.10, the display portion 100 is moved obliquely, so that the front face of the main body portion 152 can be opened. An insertion and removal opening of the connector for writing in or reading information to/from a storage medium such as a CD and a DVD, and a HDD is provided in the front face of the main body portion 152. The front face of the main body portion 152 has a configuration such that the insertion and removal of the storage medium and the connector can be operated.

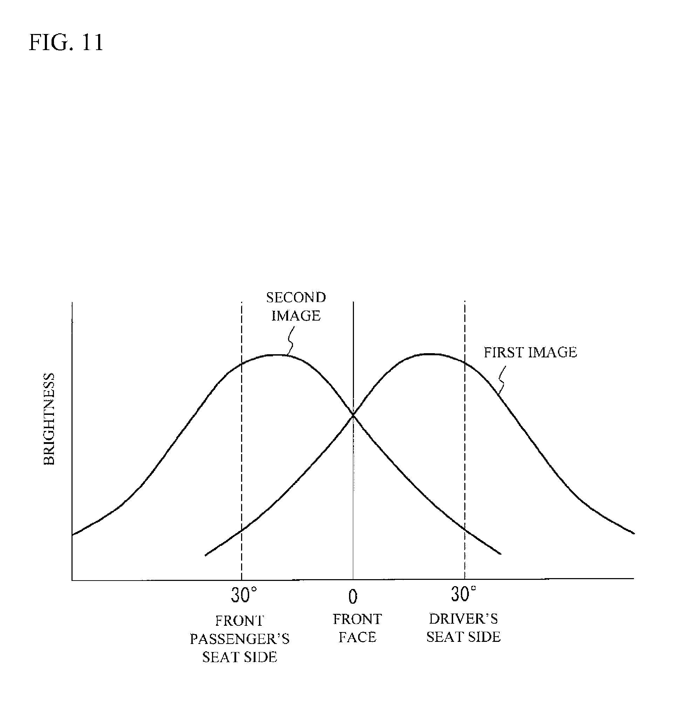

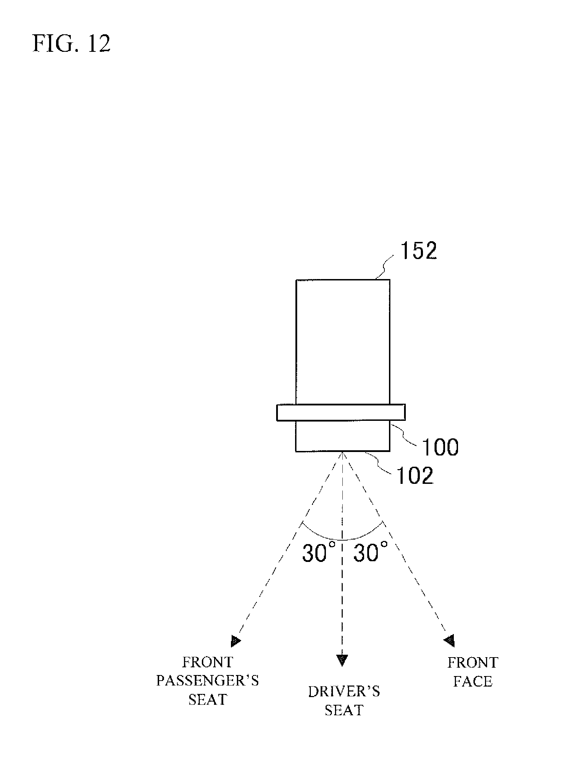

A description will be given of control of the controller 20 displaying an inspection image (confirmation image and adjustment image) on the display screen when the display apparatus in accordance with the first exemplary embodiment is inspected, confirmed, or adjusted. First, a description will be given of each of inspection, confirmation, and adjustment. In FIG. 7, for example, when the first image IM1 is watched at the driver's seat side, the second image IM2 is watched so as to superimpose it on the first image IM1. The inspection, the confirmation, and the adjustment of the crosstalk mean executing the inspection, the confirmation, and the adjustment of superimposing the first image and the second image when the first image and the second image are watched from difference directions (the driver's seat side and the front passenger's seat side), and adjusting the crosstalk based on the inspection results and the confirmation results. FIG. 11 is a view describing the crosstalk. A horizontal axis represents brightness of the display screen 102 when a front face of the display screen 102 is 0 degree, and the display screen 102 is watched from each angle. FIG. 12 shows positional relationship when the display screen 102 is watched from the front face to the display screen 102, 30 degrees of the driver's seat side, and 30 degrees of the front passenger's seat side. In FIG. 11, a right curving line and a left curving line are brightness of the first image and the second image, respectively. For example, in 30 degrees of the driver's seat side, brightness of the first image is large, but brightness of the second image is not zero. Therefore, the second image is watched so as to superimpose it on the first image watched from 30 degrees of the driver's seat side. The crosstalk is also different in an outstanding level depending on brightness of images. For example, when the brightness of image of other side is higher than that of my side, the crosstalk is outstandingly watched. It should be noted that the angles are not limited to the above-illustrated angles.

The inspection, the confirmation, and the adjustment of brightness mean executing inspection and confirmation of brightness of the first image and the second image on the display screen 102, and adjusting the brightness based on the inspection results and the confirmation results. The inspection, the confirmation, and the adjustment of coloring mean executing the inspection and the confirmation of whether colors of the display screen 102 is definitely displayed, and adjusting the coloring based on the inspection results and the confirmation results. That is, the inspection, the confirmation, and the adjustment of coloring mean executing the inspection and the confirmation of an intensity ratio of each light of the three primary colors (red, green, blue: RGB), and adjusting the intensity ratio of each light based on the inspection results and the confirmation results. The inspection, the confirmation, and the adjustment of an electric characteristic mean executing the inspection and the confirmation of an electric characteristic such as a consumption current of the display portion 100 when an image is displayed on the display screen 102, and adjusting the electric characteristic based on the inspection results and the confirmation results. A dual mode is a mode displaying respective different images as the first image and the second image. A single mode is a mode displaying the same images as the first image and the second image.

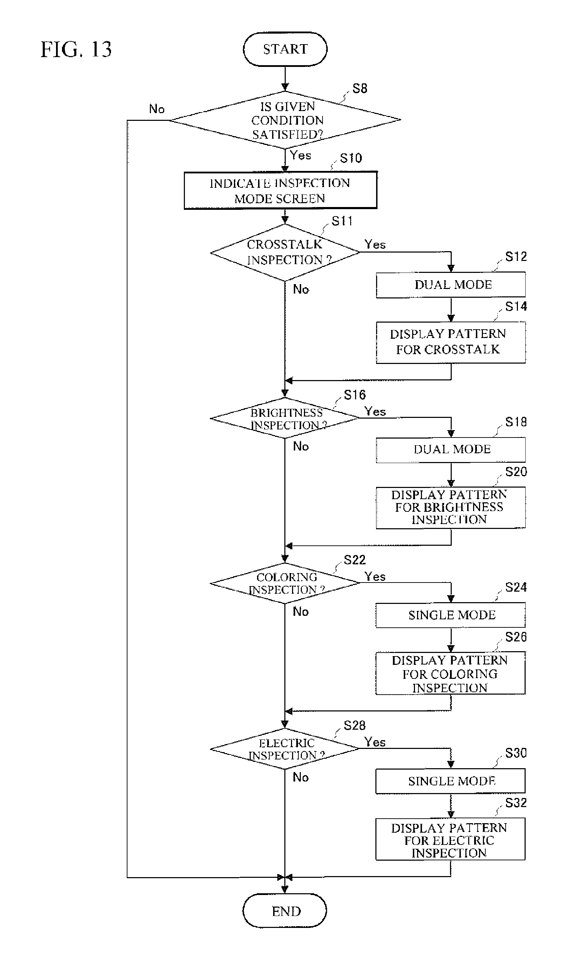

FIG. 13 is a flowchart showing a controlling method for inspection executed by the controller 20 of the display apparatus in accordance with the first exemplary embodiment. It should be noted that, in the case of the confirmation and the adjustment, the same controlling method is executed, and a description therefore will be given of only controlling method in the case of the inspection. First, the controller 20 determines whether a given condition to shift to an inspection mode is satisfied (step S8). When the given condition is not satisfied, the process is terminated. When the given condition is satisfied, the process proceeds to step S10.

The given condition may include, for example, the case where preset plural operation switches of the operation portion 150 or the touch panel 130 are simultaneously pushed, the operation switches are operated in preset order, or the like. The given condition may include the case where operations input from the operation portion 150 that is an operation means, the touch panel 130 provided on the display screen 102, and the like are identical with a combination of preset input operations. Thus, when the preset given condition is satisfied, a setting mode is shifted to the inspection mode, so that it is possible to prevent the setting mode from becoming the inspection mode by malfunction. When the given condition is satisfied, the controller 20 can execute each inspection as described above.

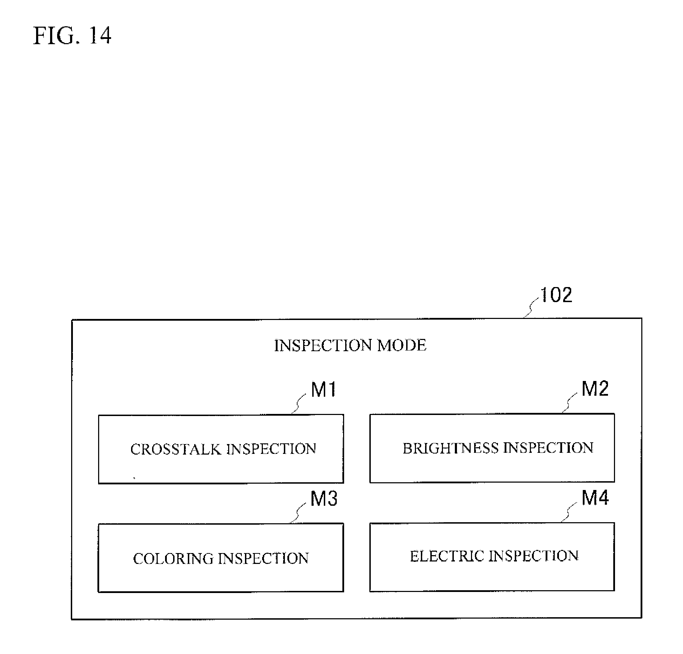

The controller 20 displays an inspection menu image on the display screen 102 (step 310). An operator selects the inspection mode with the operation portion 150 or the touch panel 130 while watching the inspection menu image. FIG. 14 shows an example of a menu of the inspection mode displayed on the display screen 102. When the operator selects a "crosstalk inspection" M1, the crosstalk inspection can be executed. Similarly, a "brightness inspection" M2, a "coloring inspection" M3, and an "electric inspection" M4 are selected, so that the respective inspections can be executed. Thus, controller 20 displays each image for inspection as described above based on a menu selected from the inspection menu image.

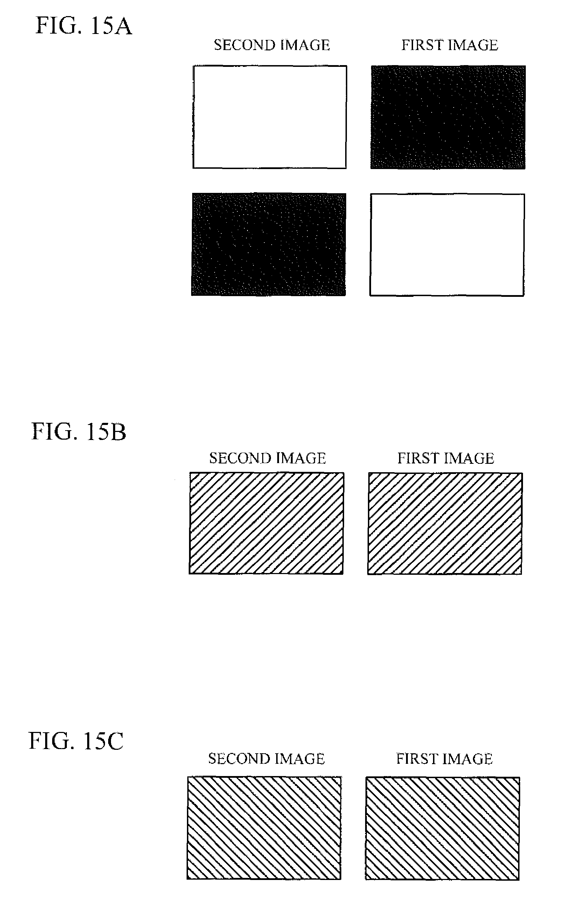

Next, the controller 20 determines whether the crosstalk inspection is selected (step S11). When the answer to the determination of step S11 is YES, the controller 20 sets the display portion 100 to the dual mode (step S12), and causes the display portion 100 to display a pattern for the crosstalk (step S14). When the answer to the determination of step S11 is NO, the process proceeds to step S16. In the crosstalk inspection, as shown in FIG. 15A, the controller 20 outputs a black monochrome image as a first inspection image (first confirmation image) to an area in which the first image (of the driver's seat side) is displayed, and outputs a white monochrome image as a second inspection image (second confirmation image) to an area in which the second image (of the front passenger's seat side) is displayed. The operator watches the display portion 100 from the driver's seat in FIG. 12, and confirms a color displayed on the display screen 102. When the operator watches the display portion 100 from the driver's seat, the white monochrome image as the second inspection image is superimposed on the black monochrome image as the first inspection image, and hence the color displayed on the display screen 102 becomes dark gray. The operator compares the level of the gray with gray of an inspection standard, and inspects whether no problem occurs in the crosstalk. Similarly, the controller 20 outputs the white monochrome image to the area in which the first image (of the driver's seat side) is displayed, and outputs the black monochrome image to the area in which the second image (of the front passenger's seat side) is displayed. The operator inspects the level of the gray. Thus, the crosstalk inspection is executed. The level of the gray is not confirmed by the operator, but can be detected with a camera or a detector. A pattern having not an achromatic color but a chromatic color and a pattern having the different designs of the color are displayed on the first image and the second image, so that the crosstalk inspection can be executed with the patterns.

Thus, for the crosstalk inspection, the controller 20 may cause the first inspection image to be displayed on the area in which the first image is displayed, and cause the second inspection image to be displayed on the area in which the second image is displayed. Then, a display state is inspected from the direction (e.g. the driver's seat) in which the first image can be watched, and the display state is inspected from the direction (e.g. the front passenger's seat) in which the second image can be watched. Thus, by executing the inspection of the display state, the inspection of the crosstalk can be easily executed, thereby reducing the man-hours of the inspection.

Although, for the crosstalk inspection, the controller 20 causes the black monochrome image as the first inspection image to be displayed on the area in which the first image is displayed, and causes the white monochrome image as the second inspection image to be displayed on the area in which the second image is displayed, the controller 20 may cause a monochrome image as the first inspection image to be displayed, and cause another monochrome image, which is different from the first inspection image, as the second inspection image to be displayed.

Further, for the crosstalk inspection, the controller 20 can cause a monochrome image as the first inspection image to be displayed on the area in which the first image is displayed, and cause a monochrome image of each color of the three primary colors (red, green, blue) as the second inspection image to be sequentially changed and displayed. Therefore, it is possible to execute the crosstalk inspection with respect to each color of the three primary colors, and execute the inspection of each pixel.

Further, for the crosstalk inspection, the controller 20 can cause the navigation image from the navigation portion 370 shown in FIG. 7 as the first inspection image to be displayed, and cause a relatively bright image (e.g. a DVD image, a television image, a video image, and so on), which is different from the navigation image, as the second inspection image to be displayed. Therefore, it is possible to execute the crosstalk inspection with a relatively dark image such as the navigation image, and an actual image to be used such as a relatively bright image.

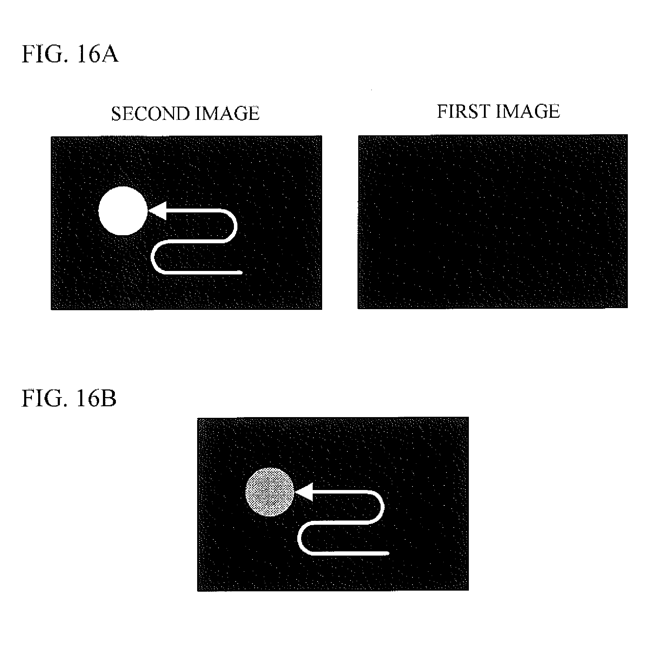

FIG. 16A shows a variation of an image displayed for the crosstalk inspection by the controller 20. The controller 20 causes the display portion 100 to display the black monochrome image as the first inspection image and an image (a video) in which a white figure for the inspection moves like a white arrow on the black monochrome image, as the second inspection image. When the display portion 100 is watched from the driver's seat side, a gray figure for the inspection seems to move on the black monochrome image, as shown in FIG. 16B. Thus, by moving the figure for the inspection (i.e., the figure for the inspection is a moving image), it is possible to watch the figure for the inspection with ease. Since peripheral parts of the figure for the inspection in the first inspection image and the second inspection image are the same monochrome images, no crosstalk occurs, and a comparison between the peripheral part and the figure for the inspection becomes easily. In the present variation, although the white figure for the inspection is used on the black monochrome image, other chromatic color or other achromatic color can be used. For example, a chromatic color and a complementary color thereof can be also used. Thus, for the crosstalk inspection, the controller 20 can cause the display portion 100 to display the monochrome image as the first inspection image and the video image, in which the figure with a different color is displayed on the same monochrome image as the first inspection image, as the second inspection image.

Next, in FIG. 13, the controller 20 determines whether the brightness inspection is selected (step S16). When the answer to the determination of step S16 is YES, the controller 20 sets the display portion 100 to the dual mode (step S18), and causes the display portion 100 to display a pattern for the brightness inspection (step S20). When the answer to the determination of step S16 is NO, the process proceeds to step S22. In the brightness inspection, as is the case with FIG. 15A, the controller 20 causes the black monochrome image to be displayed on the area in which the first image (of the driver's seat side) is displayed, and causes the white monochrome image to the area in which the second image (of the front passenger's seat side) is displayed. The operator measures brightness of the display portion 100 from the driver's seat in FIG. 12. Similarly, the controller 20 causes the white monochrome image to be displayed on the area in which the first image (of the driver's seat side) is displayed, and causes the black monochrome image to the area in which the second image (of the front passenger's seat side) is displayed. The operator measures brightness of the display portion 100 from the front passenger's seat in FIG. 12. Thus, the brightness inspection is executed. In the first exemplary embodiment, although the controller 20 causes the display portion 100 to display the same images in the crosstalk inspection and the brightness inspection, those images may be different each other.

Next, in FIG. 13, the controller 20 determines whether the coloring inspection is selected (step S22). When the answer to the determination of step S22 is YES, the controller 20 sets the display portion 100 to the single mode (step S24), and causes the display portion 100 to display a pattern for the coloring inspection (step S26). When the answer to the determination of step S22 is NO, the process proceeds to step S28. In the coloring inspection, as shown in FIG. 15B, the controller 20 causes the same images to be displayed on the area in which the first image (of the driver's seat side) is displayed, and the area in which the second image (of the front passenger's seat side) is displayed. For example, a chromatic color such as a red color and the like is displayed on the areas. The operator watches the display portion 100 from the front face in FIG. 12, and inspects whether the coloring of the display portion 100 is the coloring of inspection standard. The operator does not confirm the coloring of the display portion 100, but it is possible to detect the coloring of the display portion 100 by a camera or a detector. Moreover, a pattern for the coloring inspection having the different designs of the color is displayed on the display portion 100, so that the coloring inspection can be executed with the pattern.

Next, in FIG. 13, the controller 20 determines whether the electric inspection is selected (step S28). When the answer to the determination of step S28 is YES, the controller 20 sets the display portion 100 to the dual mode (step S30), and causes the display portion 100 to display a pattern for the electric inspection (step S32). When the answer to the determination of step S32 is NO, the inspection mode is terminated. In the electric inspection, as shown in FIG. 15C, the controller 20 causes the same images to be displayed on the area in which the first image (of the driver's seat side) is displayed, and the area in which the second image (of the front passenger's seat side) is displayed. The operator inspects the electric inspection such as a consumption current of the display portion 100.

In the crosstalk inspection, the superimposition of the first image and the second image is inspected, and it is therefore desirable to execute the crosstalk inspection with the dual mode. In the brightness inspection, the brightness of the first image and the second image can be inspected from the front face of the display screen 102 or one of other directions thereof with the single mode. However, the position relationship between the parallax barrier 115 and the color filter substrate 114 in FIG. 7 is not lined up, both of brightness of the first image and the second image are different. Therefore, as in the case of the first exemplary embodiment described above, it is desirable to execute the brightness inspection with the dual mode.

The coloring of the display screen 102 is decided by the intensity ratio of each light of three primary colors. Accordingly, when the position relationship between the parallax barrier 115 and the color filter substrate 114 is not lined up, both of the coloring of the first image and the second image are not different. Therefore, it is desirable to execute the coloring inspection from the front face of the display screen 102 or one of other directions thereof with the single mode. By executing the coloring inspection in the single mode in comparison with executing the coloring inspection with the dual mode, the coloring inspection can be executed from a single direction. Therefore, it is possible to reduce the number of times of the coloring inspection and the man-hours of the coloring inspection. The electric characteristic is not unchanged even when the position relationship between the parallax barrier 115 and the color filter substrate 114 is not lined up, for example. Therefore, it is desirable to execute the electric inspection with the single mode. As a result, it is not necessary to execute two inspections of the first image and the second image, and it is therefore possible to reduce the man-hours of the electric inspection. For the same reason, it is desirable to execute, in the single mode, an inspection for checking whether color tone, contrast, or gamma value of the image is changed by changing a setting of color tone, contrast, or gamma value.

Thus, in the display panel or the display apparatus including the display panel, when the inspection (first inspection) in which execution with the dual mode is necessary or preferable is executed, the controller 20 (display control means) causes the different images to be displayed on the area in which the first image is displayed and the area in which the second image is displayed, respectively, and when the inspection (second inspection) in which execution with the dual mode is not necessary is executed, the controller 20 causes the same images to be displayed on the area in which the first image is displayed and the area in which the second image is displayed. Therefore, the inspection in which execution with the dual mode is not necessary is executed with the single mode, so that it is possible to reduce the man-hours of the inspection.

In the first exemplary embodiment, although the inspection image for each inspection is formed in the display apparatus, there may be provided a structure such that an inspection image outputting apparatus is provided outside the display apparatus, and image signals thereof (first inspection image, and second inspection image) are input to an image inputting terminal of the display apparatus. As described above, when the performance of the display apparatus is also confirmed and adjusted in a manufacturing process, the confirmation and adjustment of the display apparatus can be executed by causing the same confirmation image as the inspection image to be displayed. Further, when the inspection, confirmation and adjustment of the display panel 102 are executed in a state where the display panel 102 is not assembled on a frame, an inspection apparatus including the controller 20, a confirmation apparatus including the controller 20, an adjustment apparatus including the controller 20 or the like are provided, and image signals output from the apparatuses are supplied to the display panel 102. As a result, the inspection, confirmation and adjustment of the display panel 102 can be achieved.

The exemplary embodiment of the present invention is described in detail. The present invention is not limited to the above embodiment but various variations may be made without departing from the present invention.

## Claims

1. A display apparatus comprising:
a display panel that displays individual images to a plurality of viewing directions on a same screen; and
a display control portion that causes a first inspection image to a single viewing direction and a second inspection image to another viewing direction to be displayed on the display panel.

2. The display apparatus as claimed in claim 1, wherein when a given condition is satisfied, the display control portion causes the first inspection image and the second inspection image to be displayed on the display panel.

3. The display apparatus as claimed in claim 2, further comprising an operation portion,
wherein when preset input operation is executed to the operation portion, the display control portion determines that the given condition is satisfied.

4. The display apparatus as claimed in claim 1, wherein the first inspection image is a monochrome image, and the second inspection image is a monochrome image which is different from the first confirmation image.

5. The display apparatus as claimed in claim 4, wherein the first inspection image is a black monochrome image, and the second inspection image is a white monochrome image.

6. The display apparatus as claimed in claim 1, wherein the first inspection image is a navigation image output from a navigation apparatus, and the second inspection image is an image which is different from the navigation image.

7. The display apparatus as claimed in claim 1, wherein the first inspection image is a monochrome image, and the second inspection image is an image having a figure, which is different in color from the monochrome image, is superimposed on the monochrome image.

8. The display apparatus as claimed in claim 1, wherein the first inspection image is a monochrome image, and the second inspection image is an image in which each monochrome image of the three primary colors is sequentially changed.

9. The display apparatus as claimed in claim 1, wherein when the given condition is satisfied, the display control portion causes an inspection menu image to be displayed, and causes the first inspection image and the second inspection image to be displayed based on a selected menu.

10. A method for inspecting a display apparatus which includes a display panel displaying individual images to a plurality of viewing directions on a same screen, and a main body portion connected to the display panel, comprising the steps of:
displaying a first inspection image to a single viewing direction of the display panel and a second inspection image to another viewing direction thereof;
inspecting a display state from the single viewing direction; and
inspecting a display state from the another viewing direction.

11. A method for manufacturing a display apparatus which includes a display panel displaying individual images to a plurality of viewing directions on a same screen, and a main body portion connected to the display panel, comprising the steps of:
displaying a first confirmation image to a single viewing direction of the display panel and a second confirmation image to another viewing direction thereof;
inspecting a display state from the single viewing direction; and
inspecting a display state from the another viewing direction.

12. A method for inspecting a display panel which displays individual images to a plurality of viewing directions on a same screen, comprising the steps of:
displaying a first inspection image to a single viewing direction of the display panel and a second inspection image to another viewing direction thereof;
inspecting a display state from the single viewing direction; and
inspecting a display state from the another viewing direction.

13. A method for manufacturing a display panel which displays individual images to a plurality of viewing directions on a same screen, comprising the steps of:
displaying a first confirmation image to a single viewing direction of the display panel and a second confirmation image to another viewing direction thereof;
inspecting a display state from the single viewing direction; and
inspecting a display state from the another viewing direction.
